# EUROPEAN PATENT SPECIFICATION

(11) **EP 2 324 926 B1**
(45) Date of publication and mention of the grant of the patent: **26.12.2012**
(21) Application number: 10190726.9
(22) Date of filing: 10.11.2010
(51) Int. Cl.: B03B 9/06

(54) **Apparatus for recovering raw gypsum from plasterboard or from other similar gypsum-based materials**
Anlage zur Wiedergewinnung von Gips aus Gipskartonplatten oder anderen Materialien auf Basis von Gips
Installation de récupération du plâtre des panneaux de plâtre où d'autres matériaux à base de plâtre

(30) Priority: 13.11.2009 IT PD20090336
(43) Date of publication of application: 25.05.2011
(73) Proprietor: Euromoquettes S.r.L., 30020 San Michele al Tagliamento (VE) (IT)
(72) Inventor: Lena, Angelo Antonio, 30026 Portogruaro VE (IT); Moras, Marzia, 30020 Pramaggiore VE (IT); Perzolla, Ilario, 30020 Pramaggiore VE (IT); Barboni, Luca, 30026 Portogruaro VE (IT)
(74) Representative: Modiano, Micaela Nadia

(56) References cited:
- JP-A- 2001 009 434
- JP-A- 2004 243 165
- JP-A- 2007 245 023
- US-A- 6 164 572

## Description

The present invention relates to an apparatus for recovering raw gypsum from plasterboard or from other similar gypsum-based materials, where the term 'raw gypsum' is used to mean natural gypsum, not fired gypsum for industrial uses.

Plasterboard is currently one of the most widely-used materials in light building owing to its speed of application and its particular heat and noise insulation properties.

Generally, a panel of plasterboard is obtained from a core of rehydrated hemihydrate gypsum, reinforced with heavy cardboard which acts as an external shell.

The width of a standard panel is 120 centimetres, and the length can vary from 60 to 400 centimetres. The thickness can vary from 6 to 25 millimetres with the most common standard of thickness comprised between 12.5 and 15 millimetres.

Nowadays, owing to the increasingly stringent regulations governing the disposal of waste from building construction, together with the constant increase in costs both of waste disposal, and of acquiring raw materials, the need to recycle such plasterboard panels when they are discarded is increasingly widespread and felt.

Today recycling systems for plasterboard are known which comprise means for separating the metal or plastic residues from the panel, and subsequently means for pulverizing the panel and separating the gypsum fragments and powder from the fragments of paper-like material, in order to then achieve the recovery of the gypsum powder.

The separation of paper-like material and gypsum performed by such a system is not optimal, and produces neither gypsum powder, nor residual paper that are ready for reuse, since neither paper-like material nor gypsum are completely separated, and therefore both contain a percentage of each other. Moreover, the plasterboard panels are not drained of the humidity, and hence of the water, that is retained by such panels at the time of their removal, nor are the paper-like material and gypsum drained of humidity subsequently after fragmentation.

Moreover, the shredding and screening operations performed are not particularly refined and the rough subdivision of the two principal elements inevitably requires further treatments to be performed by the purchaser of such recycled gypsum and paper-like material, with unwanted additional costs and processing times in order to arrive at a product that is actually reusable.

Documents disclosing technological background from the field of the present invention are as follows.

An apparatus and method for recycling gypsum wallboards, made of a gypsum core sandwiched between two sheets of heavy paper, is known from US 6 164 572.

Japanese document JP 2001 009434 A discloses a method and device for treating spent gypsum board.

A recycling system for waste gypsum boards is known from JP 2007 245023 A.

Document JP 2004 243165 A discloses a method for classifying and recycling gypsum boards.

An apparatus for recycling gypsum plasterboard is known from EP 1 421 995 A1. The apparatus comprises a hopper with crushing means, a roller mill and a separating drum, with an optional heater and a magnetic separator between the crusher and the roller mill.

The aim of the present invention is to provide a system for recycling plasterboard, which is capable of overcoming the drawbacks of recycling systems of known type.

Within this aim, an object of the invention is to devise a system that is capable of separating gypsum and paper-like material optimally and rendering at least the gypsum powder substantially ready for reuse.

Another object of the invention is to devise a system that is capable of reducing the humidity of the plasterboard treated.

Another object of the invention is to devise an automated system that is easy to manage and requires extremely little manual labour.

Another object of the invention is to provide a system for recycling plasterboard that can be produced with known machinery and technologies.

This aim, as well as these and other objects which will become better evident hereinafter, are achieved by an apparatus for recovering raw gypsum from plasterboard or other similar gypsum-based materials, characterized in that it comprises, in line,
- a hopper for receiving plasterboard panels or panel portions and for a first reduction of said panels into first fragments,
- a first screen for separating the first plasterboard fragments from any objects not made of plasterboard which are present within the panel introduced in the receiving hopper, and designed to separate also the gypsum powder of a preset optimum particle size,
- a drying oven, designed to reduce the moisture of the first fragments that have left the first screen,
- first means for grinding the first fragments that exit from said oven into second fragments which are smaller than said first fragments,
- a second screen, designed to separate the gypsum with an optimum particle size from the second fragments predominantly made of gypsum and from third fragments predominantly made of paper-like material,
- second means for grinding said second fragments predominantly made of gypsum,
- a third screen, designed to separate the gypsum of optimum particle size from the fourth fragments that exit from said second grinding means,
- means for collecting and sending the third and fourth fragments that exit from said second screen and said third screen to
- a brushing assembly, which is designed to separate the gypsum of optimum particle size from the remaining particles of paper-like material,
- a pneumatic assembly for aspirating, filtering and sending the gypsum of optimum particle size toward collection silos.

Further characteristics and advantages of the invention will become better apparent from the following detailed description of a preferred, but not exclusive, embodiment of the system according to the invention, illustrated by way of non-limiting example in the accompanying drawings, wherein:
Figure 1 shows a system for recycling plasterboard according to the invention;
Figure 2 is a schematic view of the breakage means of the apparatus according to the present invention;
Figure 3 is a view of a screen of the apparatus according to the present invention;
Figure 4 is a view of the grinding means of the apparatus according to the present invention;
Figure 5 is a view of a brush of the apparatus according to the present invention.

With reference to the figures, a system for recycling plasterboard according to the invention is generally indicated with the reference numeral 10.

The system 10 comprises, in line, a series of machines, the first of which is a hopper 11 for receiving panels, or panel portions, of plasterboard or other gypsum-based materials. The entry point to the hopper is indicated with the arrow with the reference numeral 12.

The hopper 11 contains means for breaking up the panels, or panel portions, for a first reduction of such panels into first fragments, which exit from the hopper as indicated by the arrow 13.

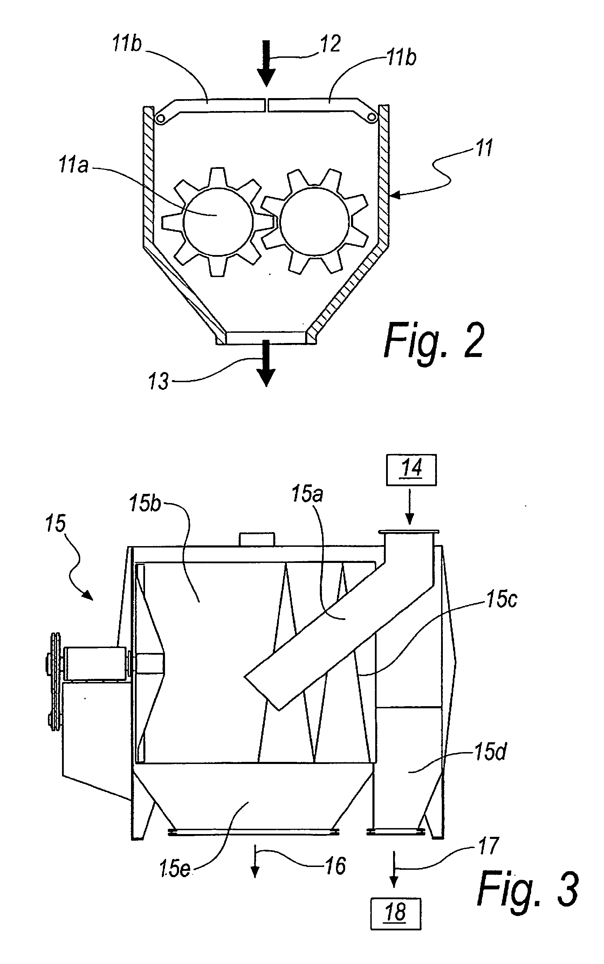

As shown in the schematization in Figure 2, the breakage means are constituted by two or more 'hammer' rotors 11 a, i.e. rotors which are provided with series of radial teeth which cooperate with the teeth of the associated other rotor 11 a in order to demolish the pieces that are pushed so as to pass between the two rotors, similarly to the shredding mills of known type that are used generally for grinding cereals, dry legumes, bran and the like.

In the hopper 11, the hammer rotors 11 a are covered by pushing and containment bulkhead gates 11b, which are adapted to push the panels, or panel portions, of plasterboard introduced into the hopper against the hammer rotors, and at the same time are adapted to prevent the hazardous exit of the fragments which fly upwards from the rotors 11 a.

The sizing/particle size of the first fragments has a diameter of around ten centimetres at maximum.

Such first fragments are collected, as they exit the hopper 11, by a screw feeder 14 which moves them towards the entry point of a first screen 15.

The first screen 15 is designed to separate the first plasterboard fragments from any objects not made of plasterboard which are present within the panel introduced in the receiving hopper 11, and is designed to separate the gypsum powder of a preset optimum particle size, for example 100 microns.

An example of a screen is schematized in Figure 3.

Such a first screen 15 comprises a slide 15a for taking in the first fragments coming from the screw feeder 14, and such fragments fall from such slide into a sifting drum 15b, which is motorized, frustum-shaped and with a helical guide 15c in order to advance the fragments towards an outlet point 15d to the subsequent oven 18.

Below the drum 15b the gypsum powder of optimum particle size is collected in a bottom 15e, from which it is aspirated as described below.

The optimum particle size configured to be achieved on exiting the system for the gypsum powder is, for example, 100 microns, with a particle size interval for the gypsum powder that can be set to a chosen value from 100 microns to 200 microns.

Such first gypsum powder is aspirated into a first duct 16 which is a part of a pneumatic assembly, described in more detail below, for the aspiration and filtration of the gypsum powder.

The first fragments that exit from the first screen 15, indicated with the arrow 17, are sent, by means of a conveyor belt or by falling, or by other means of known type, to a drying oven 18, which is designed to reduce the humidity of the first fragments exiting from the first screen. The environment inside the oven 18 is maintained at a temperature of around 40°C, with relative humidity between 7% and 10%.

Inside the oven 18 there are means, for example a conveyor belt, for advancing the fragments from the entry point to an outlet point.

Upon exiting the oven 18, the first fragments are sent, with conveyor belts, or by falling or with other means of known type, to first grinding means 19.

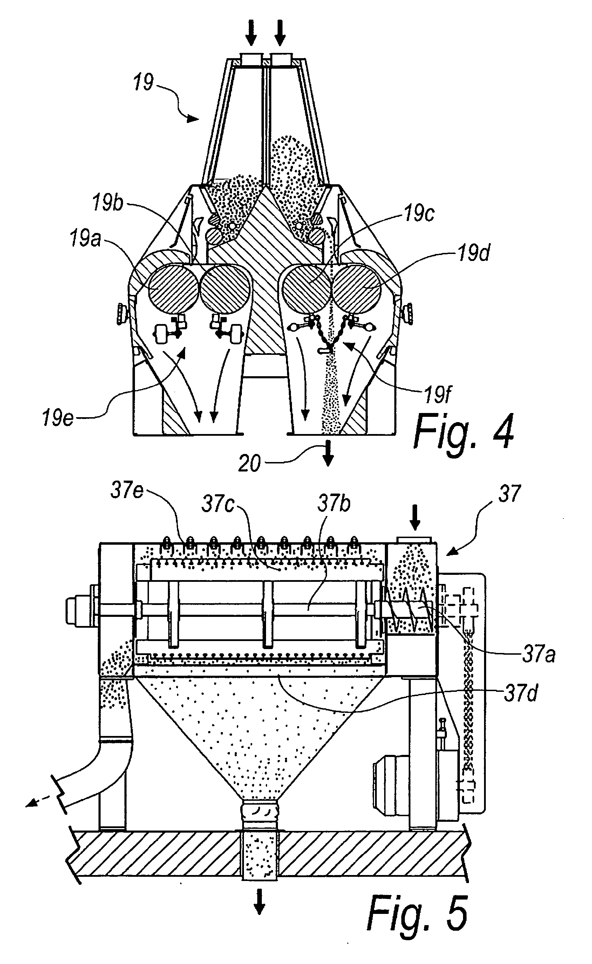

In the embodiment of the system 10 according to the invention which is described herein for the purposes of non-limiting example of the invention, the first grinding means 19 are constituted by a rolling mill with grinding rollers 19a, 19b, 19c and 19d, as in the scheme in Figure 4, for example horizontal rollers in centrifugal cast iron, for soft wheat, durum wheat, barley and the like.

The rolling mill shown here for the purposes of non-limiting example of the invention has two pairs of rollers, a first pair constituted by the first rollers 19a and 19b and a second pair constituted by the second rollers 19c and 19d.

The first rollers 19a and 19b are intended to be grooved or milled, for grinding fragments of particularly fine fragment size, which could slip through smooth rollers.

The first rollers 19a and 19b are associated with rocker arm devices 19e, of a type that is per se known, with brushes for cleaning such first rollers.

The second rollers 19c and 19d are instead smooth, for grinding fragments of not particularly fine particle size.

The second rollers 19c and 19d are associated with corresponding cleaning means, which are constituted by a rocker arm device 19f, of a type that is per se known, with a scraping blade for removing the damp powder which may remain on the rollers.

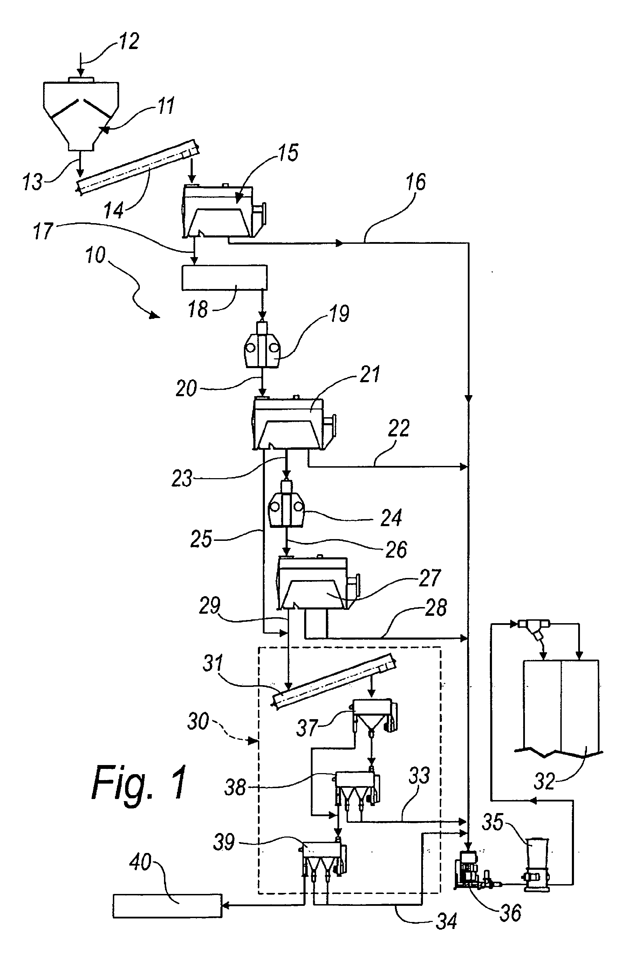

Such a rolling mill is of a type that is per se known, and can be sourced on the market for milling and cereal grinding machines, and can be used for reducing the first fragments of plasterboard into second fragments, indicated in Figure 1 as exiting from such rolling mill by the arrow with the reference numeral 20. Such second fragments are smaller in size than the first fragments.

The average diameter of the second fragments exiting from the first rolling mill 19 is between 5 millimetres and 10 millimetres.

Such second fragments are sent to a second screen 21, which is similar to the first screen 15 described previously, and which is moreover provided with a sifting drum with two screening sections with screening meshes with holes of different sizes, which is designed to separate the gypsum of optimum particle size, which exits from a second duct 22 and comes from a first screening section, from the second fragments which are predominantly made up of gypsum, which come from the second screening section and must be ground up further, and from third fragments which are predominantly made up of paper-like material or the like, which are expelled by the sifting drum at the outlet point.

The second screen 21 separates the gypsum from the paper according to the different particle size, with the diameter of the exiting fragments 23 between 2 millimetres and 3 millimetres.

The second fragments which must be ground up further are sent, as schematically indicated by the arrow 23, to second grinding means 24, i.e. to a second rolling mill which is similar to the first one, while the third fragments which are predominantly made up of paper-like material are sent to a subsequent brushing assembly, which is described in more detail below, by means of a third duct 25.

From the second grinding means 24 for the second fragments, which are predominantly made up of gypsum, fourth fragments exit, which are indicated by the arrow 26 as subsequently entering a third screen 27, which is similar to the first.

This third screen 27 is designed to separate the gypsum of optimum particle size from the fourth fragments. The gypsum of optimum particle size is removed by the third screen 27 by means of a fourth duct 28, while the fourth fragments are carried off by means of a fifth duct 29, which is also directed to the subsequent brushing assembly.

The first screen 15, the second screen 21 and the third screen 27 are intended to be of a type that is per se known, that can be sourced on the market for milling and cereal grinding machines.

Such screens are, for example, as described above, of the horizontal sifting drum type with incorporated helical guide and a sieve for classification of the products, provided with its own motor.

The third and fourth fragments which exit from the second screen 21 and the third screen 27 arrive, by means of the third duct 25 and the fifth duct 29, at means for collecting and sending, for example a second screw feeder 31, to a brushing assembly 30 which is designed to separate the gypsum of optimum particle size from the remaining particles of paper-like material.

The dimensions of the fragments collected by the second screw feeder 31 and destined to enter the brush can vary from pieces measuring 10 centimetres by 10 centimetres, down to pieces measuring 5 millimetres in diameter.

The system 10 comprises a pneumatic assembly for aspirating, filtering and sending the gypsum of optimum particle size toward collection silos 32.

Such pneumatic assembly comprises the ducts 16, 22 and 28 which exit from the screens 15, 21 and 27, together with additional ducts 33 and 34 that exit from the brushing assembly 30, and a low-pressure filter 35, which is designed to aspirate the gypsum powder of optimum particle size by means of such ducts.

The low-pressure filter 35, which is of a type that is per se known and can be sourced on the market as a filter associated with cereal grinding machines and the like, accumulates the gypsum powder in a collection bottom, and such bottom is associated with a discharge valve and a compressor 36 which is designed to blow the gypsum powder toward the silos 32.

The brushing assembly 30, in the embodiment of the system described herein for the purposes of non-limiting example of the invention, comprises a first machine 37 for sieving flours, known as a "brush" and schematized in Figure 5, which is designed to eliminate all the foreign objects made of paper-like material that are present from the third and fourth plasterboard fragments, which are introduced in it by the second screw feeder 31.

The brush 37 has a feeder screw 37a for introducing the fragments to be processed toward a rotor 37b for centrifugally separating the fragments to be ground up, which has four longitudinal beaters 37c. The rotor 37b rotates in proximity to a skirt 37d, which is perforated below and functions as a sieve.

Inside the chamber in which the rotor 37b rotates, there are stator paddles 37e with adjustable orientation for varying the length of time for which the fragments remain inside the machine.

The size of the particles of paper which exit from the brush 37 is around 5 millimetres.

At the output of the first machine 37, the gypsum powder obtained is sent to a subsequent second machine 38, while the residual fragments of plasterboard are sent to a third machine 39.

The second machine 38 is a so-called "horizontal vibrating brush", which is also a machine of a per se known type in the cereal processing sector, that is designed to reprocess the received gypsum powder so as to reduce it to the optimum particle size and at the same time expel the further plasterboard fragments that might still be present.

The vibrating brush is substantially structurally similar to the first machine 37 which is described above and schematized in Figure 5, and is provided with a larger number of longitudinal beaters, and with unbalancing masses on such beaters, which are designed to generate a vibration that is such as to obtain the self-cleaning of the beaters themselves.

From the second machine 38, the gypsum powder of optimum particle size is conveyed to the filter 35 by means of the duct 37, while the residual plasterboard fragments are sent to the subsequent third machine 39, together with the fragments of plasterboard which come from the first machine 37.

The third machine 39 is also a horizontal vibrating brush.

In output from the third machine 39, the gypsum powder of optimum particle size is aspirated by means of the duct 34 by the filter 35, while the particles of paper-like material, which by now lack gypsum powder or in any case carry a negligible amount of gypsum powder, are sent to a container 40 for pressing.

The particles of paper-like material which are collected in the container are of clean paper, and have sizes which can vary from pieces measuring 10 centimetres by 10 centimetres, and measuring 5 millimetres in diameter, with a humidity of between 7% and 10%.

In practice it has been found that the invention fully achieves the intended aim and objects.

In particular, with the invention a system is devised that is capable of separating gypsum and paper-like material optimally and rendering at least the gypsum powder substantially ready for reuse. This is made possible by the two rolling mills 19 and 24 and by the brushing assembly 30 which further reprocesses the particles of paper-like material that might still carry gypsum.

Moreover, with the invention a system is devised that is capable of reducing the humidity of the plasterboard processed, thanks to the oven 18. This dehumidification is essential in order to permit the optimal execution of all the subsequent grinding and brushing operations, which might not be effective in the presence of excess humidity.

All the machines used which are typically used in the cereal processing sector, for grinding and pulverising cereals and the like, can easily be calibrated according to the variation of the optimum particle size of the gypsum powder to be recovered.

Furthermore, with the invention an automated system is devised that is easy to manage and requires extremely little manual labour.

Moreover, with the invention an apparatus is devised for recovering raw gypsum from plasterboard or from other similar gypsum-based materials, which can be produced with known machinery and technologies.

The invention thus conceived is susceptible of numerous modifications and variations, all of which are within the scope of the appended claims. Moreover, all the details may be substituted by other, technically equivalent elements.

In practice the materials employed, as well as the dimensions and the contingent shapes, may be any according to requirements and to the state of the art.

The disclosures in Italian Patent Application No. PD2009A000336 form the basis from which this application claims priority.

Where technical features mentioned in any claim are followed by reference signs, such reference signs have been inserted for the sole purpose of increasing the intelligibility of the claims and accordingly such reference signs do not have any limiting effect on the interpretation of each element identified by way of example by such reference signs.

## Claims

1. An apparatus (10) for recovering raw gypsum from plasterboard or from other similar gypsum-based materials, **characterized in that** it comprises, in line,
- a hopper (11) for receiving plasterboard panels or panel portions and for a first reduction of said panels into first fragments,
- a first screen (15) for separating the first plasterboard fragments from any objects not made of plasterboard which are present within the panels introduced in the receiving hopper, and designed to separate and collect the gypsum powder of a preset optimum particle size,
- a drying oven (18), designed to reduce the moisture of the first fragments that have left the first screen (15),
- first means (19) for grinding the first fragments that exit from said oven into second fragments which are smaller than said first fragments,
- a second screen (21), designed to separate the gypsum powder with an optimum particle size from the second fragments predominantly made of gypsum and from third fragments predominantly made of paper-like material,
- second means (24) for grinding said second fragments predominantly made of gypsum,
- a third screen (27), designed to separate the gypsum powder of optimum particle size from the fourth fragments that exit from said second grinding means (24),
- means (31) for collecting and sending the third and fourth fragments that exit from said second screen (21) and said third screen (27) to
- a brushing assembly (30), which is designed to separate the gypsum powder of optimum particle size from the remaining particles of paper-like material,
- a pneumatic assembly for aspirating, filtering and sending the gypsum of optimum particle size toward collection silos (32).

2. The apparatus according to claim 1, **characterized in that** said pneumatic assembly comprises ducts (16, 22, 28) which exit from the screens (15, 21, 27), together with additional ducts (33, 34) that exit from the brushing assembly (30), and a low-pressure filter (35), which is designed to aspirate the gypsum powder of optimum particle size by means of said ducts.

3. The apparatus according to claim 2, **characterized in that** said low-pressure filter (35) comprises a bottom for collecting the gypsum powder of optimum particle size, a discharge valve being associated with said bottom, and a compressor (36) designed to blow the gypsum powder toward the silos (32).

4. The apparatus according to the preceding claims, **characterized in that** said brushing assembly (30) comprises a first machine (37) designed to eliminate all the foreign objects made of paper-like material that are present from the third and fourth plasterboard fragments, which are introduced in it by the second screw feeder (31).

5. The apparatus according to the preceding claims, **characterized in that** at the output from said first machine (37), the resulting gypsum powder is sent to a subsequent second machine (38), while the residual plasterboard fragments are sent to a third machine (39), said second machine (38) and said third machine (39) both being a horizontal vibrating brush designed to reprocess the received gypsum powder so as to reduce it to the optimum particle size and at the same time expel the further plasterboard fragments that might still be present.

6. The apparatus according to the preceding claims, **characterized in that** in output from said third machine (39) the gypsum powder of optimum particle size is aspirated by means of the duct (34) by the filter (35), while the particles of paper-like material, which by now lack gypsum powder or in any case carry a negligible amount of gypsum powder, are sent to a container (40) for pressing.

## Patentansprüche

1. Vorrichtung (10) zum Zurückgewinnen von Rohgips aus Gipskarton oder aus anderen ähnlichen gipsbaslerten Materialien, **dadurch gekennzeichnet, dass** die Vorrichtung in Reihe folgendes aufweist:
- einen Einfülltrichter (11) zum Aufnehmen von Gipskartonplatten oder Plattenteilen und für eine erste Zerkleinerung der Platten in erste Fragmente,
- ein erstes Sieb (15) zum Trennen der ersten Gipskartontragmente von allen Objekten, die nicht aus Gipskarton hergestellt sind, die in den Platten, die in den Einfülltrichter eingefüllt wurden, vorhanden sind, und ausgestaltet ist zum Trennen und Sammeln von Gipspuder einer vorbestimmten optimalen Teilchengröße,
- einen Trockenofen (18), der ausgebildet ist, die Feuchtigkeit der ersten Fragmente zu reduzieren, die das erste Sieb (15) verlassen haben,
- erste Mittel (19) zum Mahlen der ersten Fragmente, die den Ofen verlassen, zu zweiten Fragmenten, die kleiner sind als die ersten Fragmente,
- ein zweites Sieb (21), das ausgebildet ist, den Gipspuder mit einer optimalen Teilchengröße von den zweiten Fragmenten, die hauptsächlich aus Gips bestehen, und von dritten Fragmenten zu trennen, die hauptsächlich aus papierartigem Material bestehen,
- zweite Mittel (24) zum Mahlen der zweiten Fragmente, die hauptsächlich aus Gips bestehen,
- ein drittes Sieb (27), das ausgebildet ist, den Gipspuder einer optimalen Teilchengröße von den vierten Fragmenten zu trennen, die die zweiten Mahlmlttel (24) verlassen,
- Mittel (31) zum Sammeln und Befördern der dritten und vierten Fragmente, die das zweite Sieb (21) und das dritte Sieb (27) verlassen, zu
- einer Bürstenanordnung (30), die ausgebildet ist, um den Glpspuder einer optimalen Teilchengröße von den verbleibenden Teilchen aus einem papietartigen Material zu trennen,
- eine pneumatische Einrichtung zum Ansaugen, Filtern und Befördern des Gipses einer optimalen Teilchengröße zu Sammelsilos (32).

2. Vorrichtung nach Anspruch 1, **dadurch gekennzeichnet, dass** die pneumatische Einrichtung Leitungen (16, 22, 28), die von den Sieben (15, 21, 27) abgehen, zusammen mit zusätzlichen Leitungen (33, 34), die von der Bürstenanordnung (30) abgehen, und einen Niedrigdruckfilter (35) aufweist, der eingerichtet ist, zum Ansaugen des Gipspuders einer optimalen Teilchengröße mittels der Leitungen.

3. Vorrichtung nach Anspruch 2, **dadurch gekennzeichnet, dass** der Nledrigdruckfilter (35) einen Boden zum Sammeln des Gipspuders einer optimalen Tellchengröße, ein Auslassventil, das mit dem Boden verbunden ist, und einen Kompressor (36) aufweist, der eingerichtet ist, den Gipspuder In Richtung auf die Silos (32) zu blasen.

4. Vorrichtung nach einem der vorstehenden Ansprüche, **dadurch gekennzelchnet, dass** die Bürstenanordnung (30) eine erste Maschine (37) aufweist, die eingerichtet ist, alle die vorhandenen Fremdobjekte aus einem papierartigen Material aus den dritten und vierten Gipskartonfragmenten zu beseitigen, die durch die zweite Dosierschnecke (31) in sie eingebracht wurden.

5. Vorrichtung nach einem der vorstehenden Ansprüche, **dadurch gekennzeichnet, dass** an dem Ausgang der ersten Maschine (37) der resultierende Gipspuder zu einer sich anschließenden zweiten Maschine (38) befördert wird, während die verbleibenden Gipskartonfragmente zu einer dritten Maschine (39) befördert werden, wobei die zweite Maschine (38) und die dritte Maschine (39) jewells eine horizontal vibrierende Bürste sind, die eingerichtet sind, um den eingefüllten Gipspuder wieder aufzubereiten, indem er auf die optimale Teilchengröße verkleinert wird und gleichzeitig die weiteren Glpskartonfragmente, die noch vorhanden sein könnten, ausgeworfen werden.

6. Vorrichtung nach einem der vorstehenden Ansprüche, **dadurch gekennzeichnet, dass** im Ausgang der dritten Maschine (39) der Gipspuder der optimalen Teilchengröße durch die Leitung (34) von dem Filter (35) angesaugt werden, während Tellchen aus papierartigem Material, die inzwischen keinen Gipspuder oder allenfalls einen vernachlässigbaren Anteil an Gipspuder tragen, zu einem Container (40) zum Verpressen transportiert werden.

## Revendications

1. Appareil (10) pour récupérer du gypse brut d'une plaque de plâtre ou d'autres matériaux similaires à base de gypse, **caractérisé en ce qu'**il comprend, en ligne ;
une trémie (11) pour recevoir des panneaux ou des parties de panneau de plaque de plâtre et pour une première réduction desdits panneaux en premiers fragments,
un premier tamis (15) pour séparer les premiers fragments de plaque de plâtre de tout objet non réalisé en plaque de plâtre qui est présent dans les panneaux introduits dans la trémie de réception, et conçu pour séparer et collecter la poudre de gypse d'une taille particulaire optimale préréglée,
un four de séchage (18) conçu pour réduire l'humidité des premiers fragments qui sont sortis du premier tamis (15),
des premiers moyens (19) pour broyer les premiers fragments qui sortent dudit four en deuxièmes fragments qui sont plus petits que lesdits premiers fragments,
un deuxième tamis (21) conçu pour séparer la poudre de gypse avec une taille particulaire optimale des deuxièmes fragments principalement composés de gypse et des troisièmes fragments principalement composés de matériau de type papier,
des seconds moyens (24) pour broyer lesdits deuxièmes fragments principalement composés de gypse,
un troisième tamis (27) conçu pour séparer la poudre de gypse de taille particulaire optimale des quatrièmes fragments qui sortent desdits seconds moyens de broyage (24),
des moyens (31) pour collecter et envoyer les troisièmes et quatrièmes fragments qui sortent dudit deuxième tamis (21) et dudit troisième tamis (27) vers
un ensemble de brossage (30) qui est conçu pour séparer la poudre de gypse de taille particulaire optimale des particules résiduelles du matériau de type papier,
un ensemble pneumatique pour aspirer, filtrer et envoyer le gypse de taille particulaire optimale vers des silos de collecte (32).

2. Appareil selon la revendication 1, **caractérisé en ce que** ledit ensemble pneumatique comprend des conduits (16, 22, 28) qui sortent des tamis (15, 21, 27), conjointement avec des conduits supplémentaires (33, 34) qui sortent de l'ensemble de brossage (30), et un filtre basse pression (35) qui est conçu pour aspirer la poudre de gypse de taille particulaire optimale au moyen desdits conduits.

3. Appareil selon la revendication 2, **caractérisé en ce que** ledit filtre basse pression (35) comprend un fond pour collecter la poudre de gypse de taille particulaire optimale, une soupape de décharge étant associée audit fond, et un compresseur (36) conçu pour souffler la poudre de gypse vers les silos (32).

4. Appareil selon les revendications précédentes, **caractérisé en ce que** ledit ensemble de brossage (30) comprend une première machine (37) conçue pour éliminer, des troisièmes et quatrièmes fragments de plaque de plâtre, tous les objets étrangers composés de matériau de type papier qui sont présents, qui y sont introduits par le second alimentateur à vis (31),

5. Appareil selon les revendications précédentes, **caractérisé en ce qu'**à la sortie de ladite première machine (37), la poudre de gypse résultante est envoyée à une deuxième machine (38) consécutive, tandis que les fragments de plaque de plâtre résiduels sont envoyés à une troisième machine (39), ladite deuxième machine (38) et ladite troisième machine (39) étant toutes deux une brosse vibrante horizontale conçue pour retraiter la poudre de gypse reçue de manière à la réduire à la taille particulaire optimale et en même temps expulser les autres fragments de plaque de plâtre qui peuvent être encore présents.

6. Appareil selon les revendications précédentes, **caractérisé en ce qu'**à la sortie de la troisième machine (39), la poudre de gypse de taille particulaire optimale est aspirée au moyen du conduit (34) par le filtre (35), tandis que les particules de matériau de type papier, qui sont désormais dépourvues de poudre de gypse, ou dans tous les cas transportent une quantité négligeable de poudre de gypse, sont envoyées vers un conteneur (40) pour être comprimées.
